Europäisches Patentamt

European Patent Office

Office européen des brevets

(19)

(11) Publication number: **0 035 346**
**A2**

(12) **EUROPEAN PATENT APPLICATION**

(21) Application number: **81300693.9**

(51) Int. Cl.³: **F 03 B 13/12**

(22) Date of filing: **19.02.81**

(30) Priority: **27.02.80 GB 8006628**
**18.12.80 GB 8040521**

(43) Date of publication of application: **09.09.81**
**Bulletin 81/36**

(84) Designated Contracting States: **FR GB SE**

(71) Applicant: **The Secretary of State for Defence in Her Britannic Majesty's Government of The United Kingdom of Great Britain and, Northern Ireland Whitehall, London SW1A 2HB (GB)**

(72) Inventor: **Farley, Francis James MacDonald, Carswell Barn, Carswell Near Farringdon Oxfordshire (GB)**

(74) Representative: **Lockwood, Peter Brian et al, Ministry of Defence Patents 1 A (4) Room 1932, 19th Floor Empress State Building Lillie Road, London SW6 1TR (GB)**

(54) **Wave energy converters.**

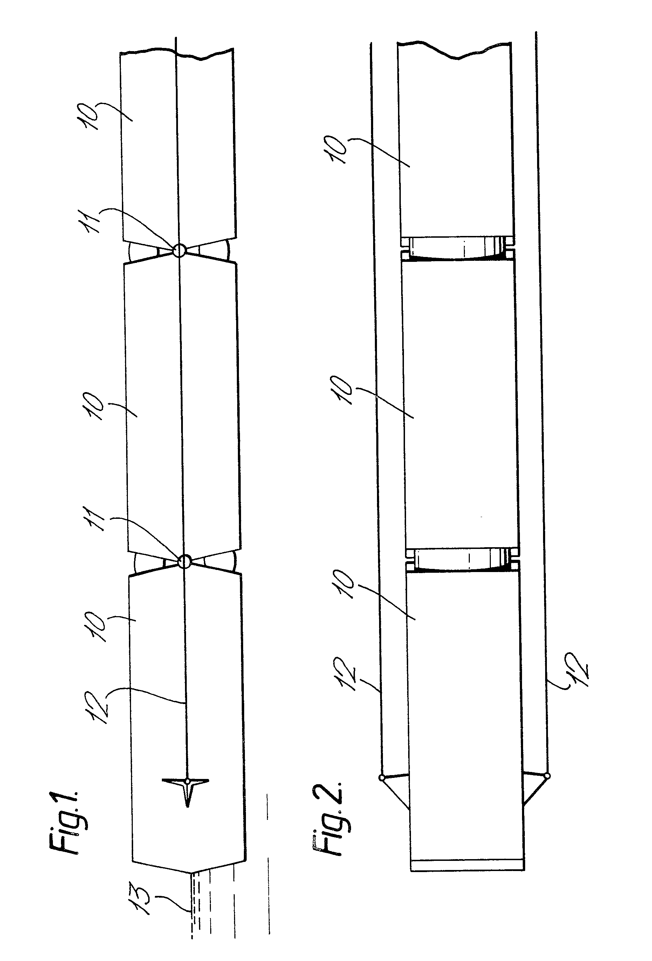

(57) A wave energy converter includes a beam, which can conveniently (Figure 1) be a plurality of hinged pontoons 10, and fluid pumping means 14, 15, 16, 17, operable by flexing of the beam (i.e. relative angular motion of adjacent pontoons '10). The converter has means such as, for example, tensioned cables 12 extending substantially the length of the beam, which assist flexing of the beam. There is also means, which can conveniently be back pressure in the pumping means 19, 20, 23, 26, 14, 15 for variably applying a straightening force tending to straighten the beam. By suitable adjustment of the pumping means, flexing means, and straightening means the converter can be made resonant for a wide range of wave conditions, so maximising the efficiency.

1

# WAVE ENERGY CONVERTERS

The present invention relates to wave energy converters.

There is considerable interest at present in the use of devices to convert the energy of sea waves into useful energy. Many different devices have been suggested for accomplishing this.

Due to the environment in which wave energy converters operate they must be robust, which leads to expense. To be economically viable, therefore, it is important that the devices be efficient, and so it is advantageous to have devices whose energy conversion means can be adjusted to take full advantage of sea conditions as those conditions change.

According to the present invention a wave energy converter includes a floating beam, fluid pumping means operable by flexing of the beam, flexing means tending to assist flexing of the beam, and means for variably applying a straightening force tending to straighten the beam.

By suitable matching of the beam flexing means, the beam straightening means and the fluid pumping means the beam can be made substantially resonant over a wide range of , wave frequencies.

In a preferred embodiment of the invention the beam includes a plurality of pontoons joined together by flexible sections or hinges.

The straightening force may be supplied by back pressure in the pumping means. The flexing means may include one or more tensioned cables extending substantially the length of the beam, and may also include means for varying the tension.

The fluid may be a gas such as air, or a liquid such as sea water or oil, and may be used, for example, to drive a turbine which drives an electrical generator. The fluid may operate in a closed recirculating system.

Some embodiments of the invention will now be described, by way of example only, with reference to the accompanying diagrammatic drawings of which:

Figure 1 is an elevation of a beam according to the invention,

Figure 2 is a plan view of the beam shown in Figure 1,

Figure 3 is an elevation, in section along line III-III of Fig 4, of a detail of the beam,

Figure 4 is an end view, in section, of the beam,

Figure 5 is a diagram of valve changeover times relative to hinge displacement,

Figure 6 is a side elevation, in section, of part of another beam according to the invention,

Figure 7 is a side elevation, in section, of part of a third beam, according to the invention,

Figure 8 is an end elevation, in section, of the beam illustrated in Figure 7,

Figure 9 is a side elevation, in section, of a fourth beam, according to the invention,

Figure 10 is an end elevation, in section, of the beam illustrated in Figure 9,

Figure 11 is a side elevation of the beam illustrated in Figure 9 moored in the sea,

Figure 12 is a side elevation, in section, of a further beam according to the invention,

Figure 13 is an end elevation, in section, of the beam illustrated in Figure 12, and

Figure 14 is an end elevation, in section, of a beam similar to that illustrated in Figure 12.

A beam (Figures 1 and 2) includes a plurality of pontoons, of which three are shown at 10, joined by hinges 11. Tensioned cables 12 extend between pontoons 10 at the ends of the beam. The beam is floating in a sea 13.

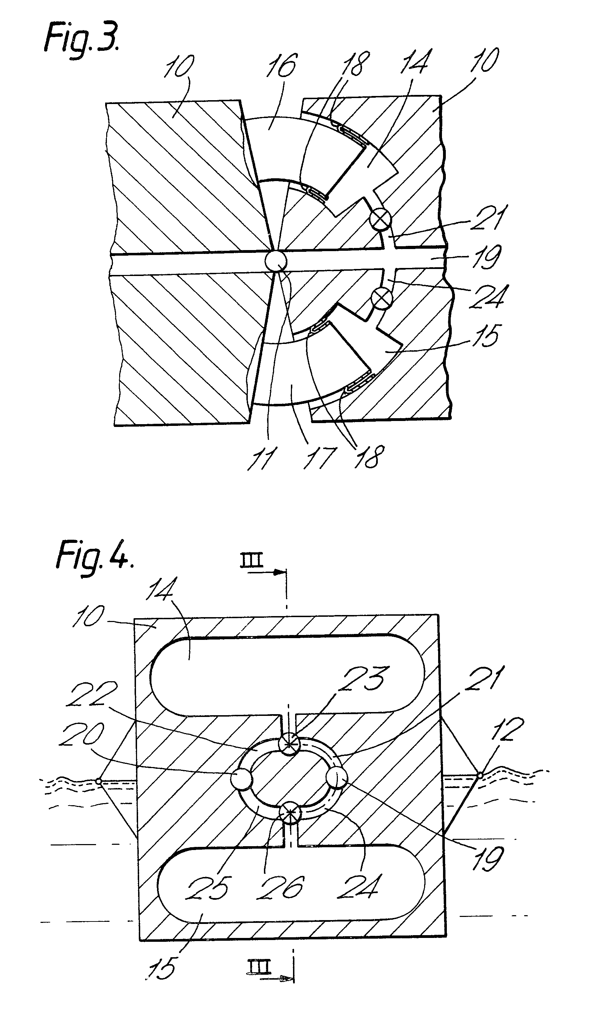

In each pair of adjacent pontoons 10 (Figure 3) one pontoon has a pair of cylinders, an upper cylinder 14 and a lower cylinder 15 whilst the other pontoon carries a pair of pistons, an upper piston 16 and a lower piston 17. The pistons and cylinders are symmetrically positioned above and below each hinge 11. The pistons 16, 17 fit cylinders 14, 15 respectively, rolling rubber seals 18 preventing leakage.

A high pressure main 19 (Figure 3 and 4) and a low pressure main 20 (Figure 4) extend the length of the beam. Each upper cylinder 14 has conduits 21, 22 leading to the high pressure 19 and low pressure 20 mains respectively, and is connected either to conduit 21 or to conduit 22 by a valve 23. Each lower cylinder 15 has conduits 24, 25 leading to high pressure 19 and low pressure 20 mains respectively, and is connected either to conduit 24 or to conduit 25 by a valve 26.

In use the beam responds to wave movement in the sea 13 by relative angular movement of pontoons 10. This causes pistons 16, 17 to move in cylinders 14, 15 and, with cycling of valves 23, 26, pumps fluid from the low pressure main 20 to the high pressure main 19. Fluid flows back from the high to low pressure mains via a turbine (not shown) which can drive, for example, an electrical generator.

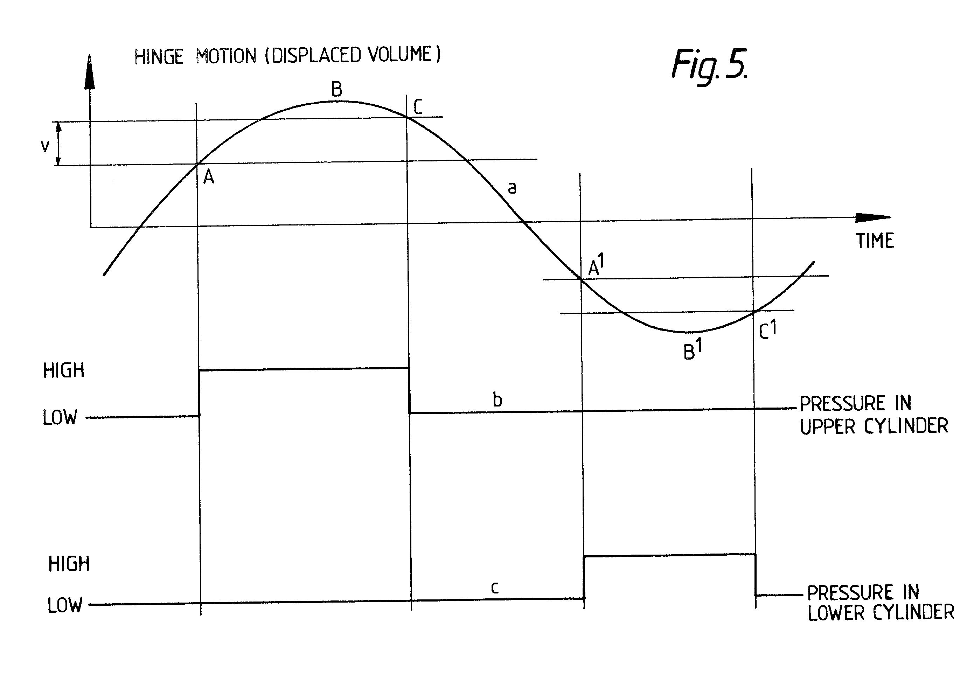

The tensioned cables 12 provide a destabilising force to the beam assisting relative movement of pontoons 10. Depending on wave conditions the operation of valves 23, 26 is controlled so that the high pressure main 19 is so connected to cylinders 14, 15 as to apply a restoring force tending to straighten the beam at appropriate parts of each cycle. This is illustrated in Figure 5 where curve 5a shows the relative angular motion of pontoons 10 at a hinge 11 and curves 5b and 5c show the changeover times of the valves 23, 26. The upper cylinder 14 is connected to the high pressure main 19 at A in Figure 5a and fluid is driven from the cylinder 14 to the main 19 from A to B. Fluid flows from the main 19 to the cylinder 14 from B to C, assisting in straightening of the beam. A net transfer of fluid to the high pressure main 19 V equal to AB minus BC is available for useful work. A similar process occurs in the lower cylinder 15 over the curve A', B' C'.

By adjusting the cycles ABC, A'B'C' the resonant frequency of the beam can be tuned to take maximum advantage of prevalent wave conditions.

Control systems for the valves 23, 26 will preferably include computors. This type of control system is well known in the art and will not be described in depth here. Similarly methods for utilising the pumped fluid to provide useful energy are well known in the art, form no part of the present invention, and hence will be mentioned only briefly. It will, of course, be realised that the fluid in mains 19, 20 can be either gaseous or liquid, and also that, as an alternative to the closed circuit arrangement described other closed or open circuit arrangements may be used. For example, the low pressure main 20 might take in water from the sea in which the beam is floating, and the high pressure main 19 might deliver the water to a level above sea level.

5

Many types of pumps operated by the relative motion of two bodies are well known in the art and might be used as alternatives to the combinations of pistons 16, 17 and cylinders 14, 15 described and illustrated.

The restoring force tending to straighten the beam might be assisted by the use of resilient elements such as springs in the hinges 11.

In an alternative version of this embodiment of the invention the tensioned cables 12 are dispensed with, and the operation of the valves 23, 26 so programmed that the pressures in cylinders 14, 15 tend to destabilise the beam for a part of each cycle.

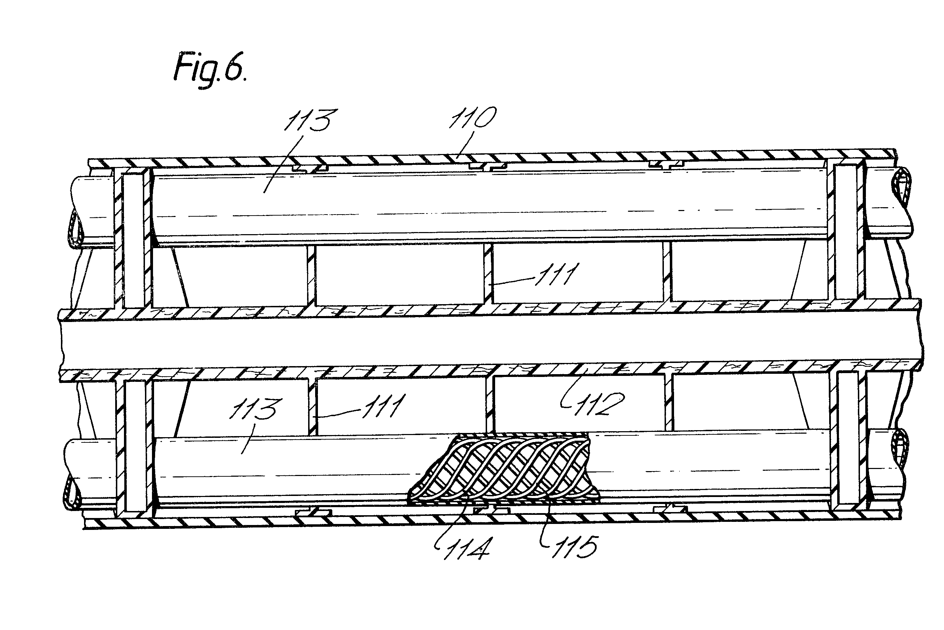

Another type of beam (part of which is illustrated in Figure 6) includes a cylindrical rubber skin 110 connected to a glass fibre reinforced plastic cylinder 112 by flanges 111. A plurality of tube pumps, such as those shown at 113, each including a cylindrical rubber skin 114 reinforced by a multi-coil spring 115, extends the length of the device. A plurality of valves (not shown) which may conveniently be positioned at the intersections of the tube pumps 113 and flanges 111, drive fluid along each pump.

Cables in tension (not shown) similar to those illustrated at 12 in Figures 1 and 2, are connected between flanges 111 at ends of the beam. Alternatively one or more cables in tension may pass along and within the cylinder 112.

In operation the beam is moored in the sea and flexes, in response to wave motion, against a restoring force provided by the cylinder 112, the cables providing a force assisting the flexing. As the beam flexes the volumes of the tube pumps 113 defined between adjacent valves cyclically increase and decrease. Opening and closing of the valves is controlled to define a pattern in each volume between adjacent valves similar to that as described with reference to Figure 5, so that for parts of each flexing cycle fluid is pumped along the associated tube pump 113 and for other parts of each cycle there is pressure within the volume assisting the beam to straighten.

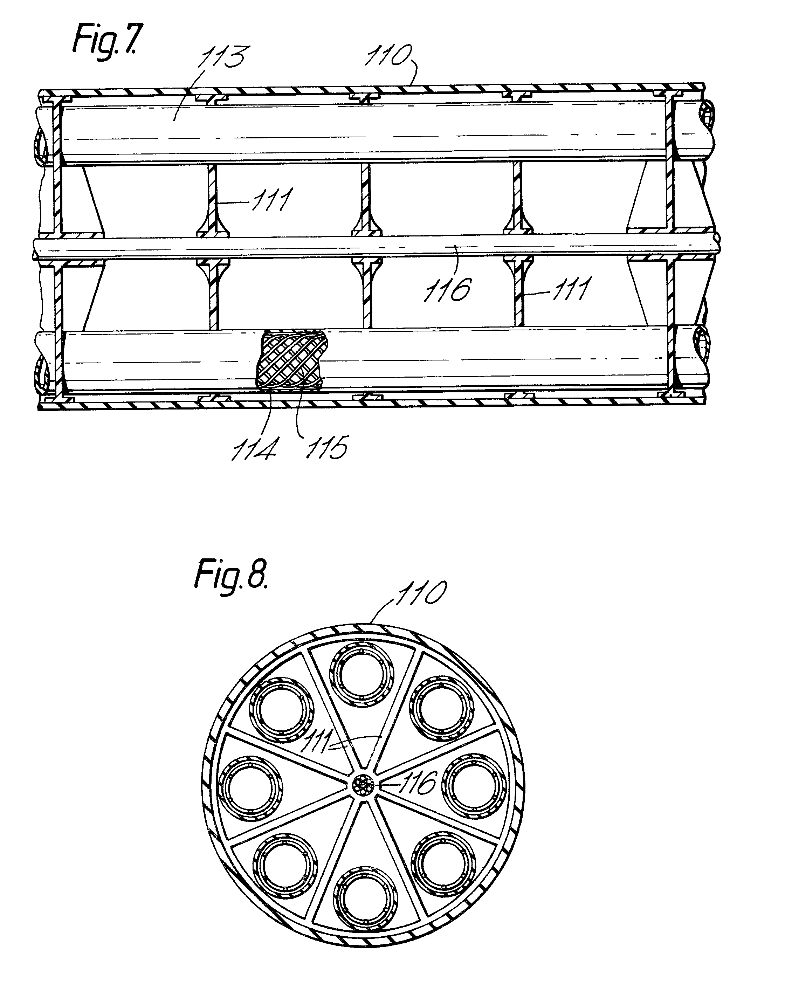

In an alternative construction (Figures 7 and 8) the cylindrical rubber skin 110 is airtight and pressurised to, for example, 3 bar.

Flanges 111 connect the rubber skin 110 to a tensioned cable 116. Tube pumps 113, and operation of this construction are as described with reference to Figure 6.

In the beams as described with reference to Figures 6, 7 and 8 high and low pressure mains, similar to those described at 19, 20 with reference to Figures 1 and 2 might run the length of each beam. Each tube pump 113 can then be divided into a plurality of discrete volumes (between adjacent flanges 111, for example) feeding into, and out of, the mains in a manner analogous to that described with reference to Figures 1 to 5.

Reinforcing wires may be incorporated in the rubber skin 110 to take hoop stress therein, and the overall buoyancy of the device adjusted by water ballast (not shown).

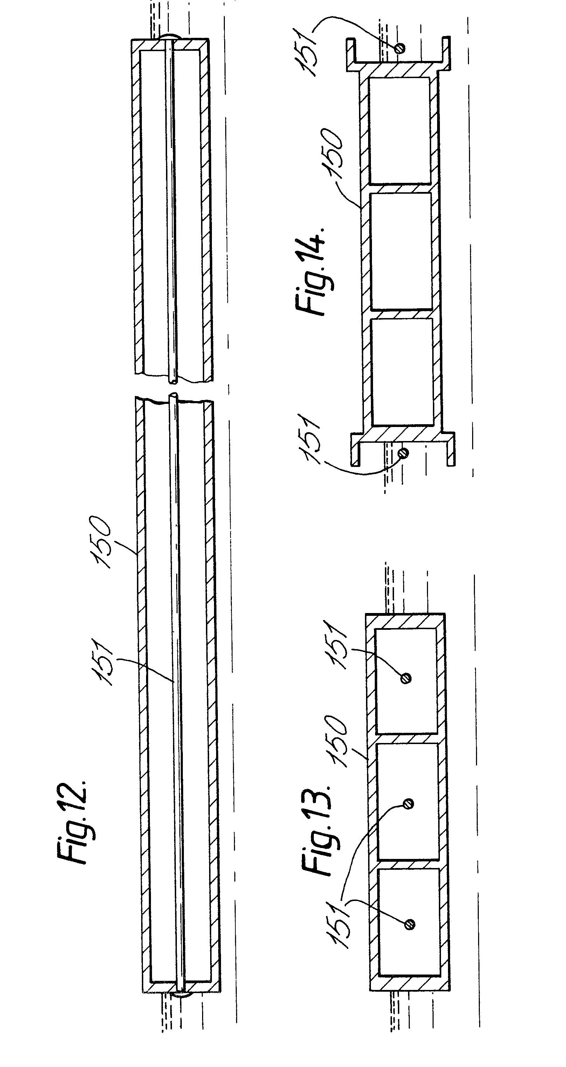

Whilst the beams as described above are described and illustrated as of circular cross-section similar beams of rectangular or other cross-sections are equally feasible. Typical rectangular cross-section beams 150, illustrated in Figures 12, 13 and 14, have tensioned cables 151 extending either internally (Figure 13) or externally (Figure 14). Pumping means are not shown in these Figures but might, for example, be similar to those described for the beams illustrated in Figures 6 to 8.

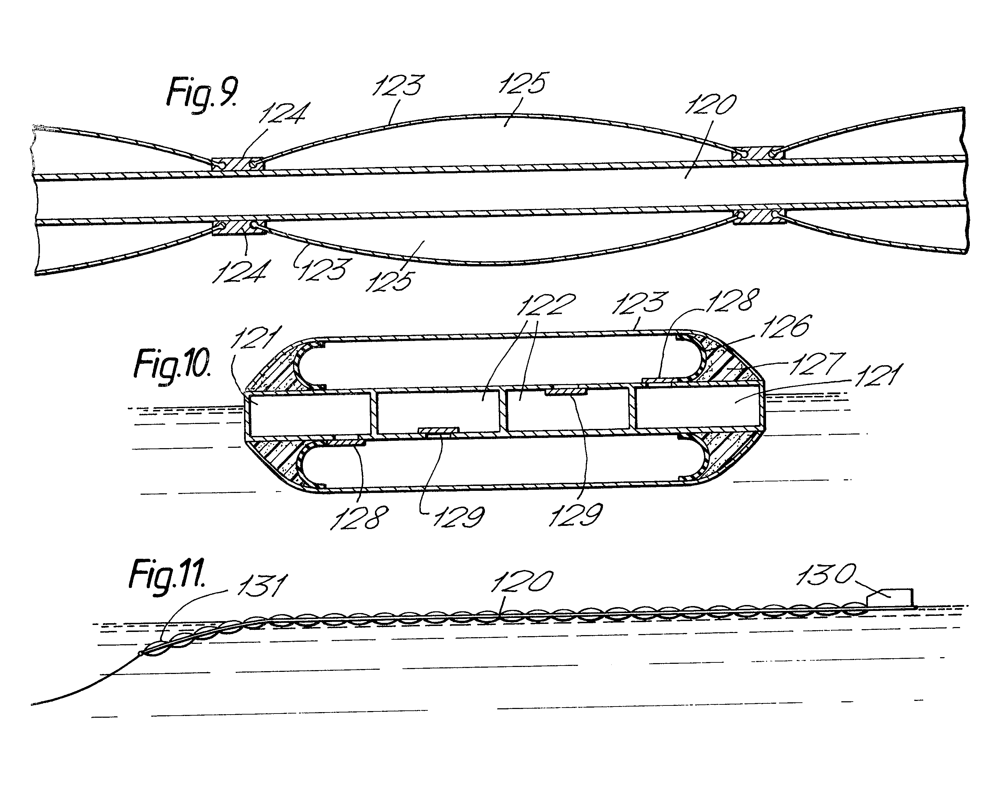

Another embodiment of the invention (Figures 9 and 10) includes a flexible beam 120 formed, for example, of glass fibre reinforced plastic, and longitudinally divided into four compartments, two low pressure compartments 121 and two high pressure compartments 122. A plurality of flexible curved steel sheets 123 are secured to the outer surfaces of the beam 120 by end pieces 124, and the sides of chambers 125 defined between the sheets 123 and beam 120 are sealed by reinforced rubber membranes 126 (Figure 10). The rubber membranes 126 may be strengthened by foam rubber masses 127. Tensioned cables (not shown) similar to those illustrated at 12 in Figures 1 and 2, extend along the length of the beam 120.

Valves 128, 129, respectively allow fluid to pass between the low pressure compartments 121 and the chambers 125 and between the chambers 125 and the high pressure compartments 122.

Chambers 125 are preferably symmetrically disposed on the upper and lower surfaces of the beam 120.

In operation the beam 120 is moored in the sea (Figure 11) with the high pressure compartments 122 leading to a power conversion chamber 130 where fluid is used to drive, for example, turbines which operate electrical generators. The fluid, which may be air, can be introduced to the low pressure chambers 121 at the power house 130. The device may work on a closed circuit system. Opening and closing of valves 128, 129 is controlled, according to wave conditions, in a manner analogous to that of valves 23, 26 as described with reference to the beam illustrated in Figures 1 and 2.

The device may conveniently be moored with its upstream end 131 (relative to the direction of wave movement) under the water surface as illustrated in Figure 11. Waves will then be absorbed gradually and the device will be protected somewhat from very severe weather conditions. This configuration may be obtained by reducing the buoyancy of the end 131.

Pumps suitable for use with the invention are well known in the art, as are methods and apparatus for using pumped fluid for the development of useful energy such as electricity. Consequently these are not described in detail in this specification. It will be clear that many variations of the above described embodiments are possible within the scope of the invention. For example, pumping means other than tube pumps 113 might be used in the embodiments as illustrated in and as described with reference to Figures 6, 7 and 8. Such pumps might, for example, be connected between a low pressure and a high pressure main, and be actuated by relative movement of adjacent flanges 111. Likewise the sheets 123 of the embodiment as illustrated in and described with reference to Figures 9 and 10 may be of material other than steel.

1

## CLAIMS

What is claimed is:

1    A wave energy converter including a floating beam, fluid pumping means 14, 15, 16, 17 operable by flexing of the beam, flexing means 12 tending to assist flexing of the beam, and means 19, 20, 23, 26, 14, 15 for variably applying a straightening force tending to straighten the beam.

2    A wave energy converter as claimed in claim 1 wherein the straightening force is supplied by back pressure in the pumping mean.

3    A wave energy converter as claimed in claim 1 or in claim 2 wherein the flexing means include one or more tensioned cables 12 extending substantially the length of the beam.

4    A wave energy converter as claimed in claim 3 wherein the tension in the     or each cable can be varied.

5    A wave energy converter as claimed in any one of claim 1 to 4 including a plurality of pontoons 10 joined together by hinges 11.

6    A wave energy converter as claimed in claim 5 wherein each hinge 11 includes a resilient element.

7    A wave energy converter as claimed in claim 6 wherein the resilient element is a spring.

8    A wave energy converter as claimed in any one of claims 1 to 4 wherein the beam has a cylindrical resilient skin 110.

9    A wave energy converter as claimed in claim 8 wherein the skin 110 is formed of rubber.

10    A wave energy converter as claimed in claim 8 or in claim 9 wherein the skin 110 is joined by flanges 111 to a central cylinder 112.

11   A wave energy converter as claimed in claim 10 wherein the cylinder 112 is formed from glass fibre reinforced plastic.

12   A wave energy converter as claimed in claim 1 or in claim 2 wherein the beam has a pressurised airtight cylindrical resilient skin 110.

13   A wave energy converter as claimed in claim 12 wherein the skin 110 is formed of rubber.

14   A wave energy converter as claimed in claim  12 or in claim 13 wherein the skin 110 is joined by flanges 111 to a tensioned central cable 116 which provides the flexing means 12.

15   A wave energy converter as claimed in any one of claims 8 to 14 including one or more tube pumps 113.

16   A wave energy converter as claimed in claim 1 or in claim 2 having a rectangularly cross-sectioned beam 150 having tensioned cables 151 extending between its ends and providing the flexing means 12.

17   A wave energy converter as claimed in claim 16 having a plurality of curved sheets 123 secured to the horizontal surfaces of the beam, and sealing means 124, 126 such that each sheet 123 defines, in conjunction with the beam, a pumping chamber 125.

18   A wave energy converter as claimed in claim 17 wherein each sheet 123 is made of steel.

19   A wave energy converter as claimed in any one of claims 1 to 18 wherein fluid is pumped from a low pressure main 20 to a high pressure main 19.

20   A wave energy converter as claimed in claim 18 wherein the fluid flows in a recirculating system.

21   A wave energy converter substantially as herein described with reference to the accompanying Figures 1 to 14.

3

22   A wave energy converter as claimed in any one of claims 1 to 21 wherein the fluid pumped is a liquid.

23   A wave energy converter as claimed in any one of claims 1 to 22 wherein the means for variably applying a straightening force include a computer control.

24   An energy supply system powered by a wave energy converter as claimed in any one of claims 1 to 23.

Fig.1.

Fig.2.

**Fig. 3.**

**Fig. 4.**

HINGE MOTION (DISPLACED VOLUME)

Fig.5.

3/7

0035346

PRESSURE IN UPPER CYLINDER

PRESSURE IN LOWER CYLINDER

Fig.6.

Fig.7.

113    110

111

116    111

114    115

Fig.8.

110

111    116

Fig.9.

Fig.10.

Fig.11.

Fig.12.

151 150

Fig.13.

151 150 151

Fig.14.

151 150 151

7/7

0035346